# EUROPEAN PATENT APPLICATION

(11) **EP 1 710 755 A2**
(43) Date of publication of application: **11.10.2006**
(21) Application number: 06251849.3
(22) Date of filing: 31.03.2006
(51) Int. Cl.: G07C 9/00

(54) **Authentication system**

(30) Priority: 31.03.2005 JP 2005105222
(71) Applicant: Sanyo Electric Co., Ltd, Moriguchi-shi, Osaka (JP)
(72) Inventor: Osugi, Shinji, Tatebayashi-shi-Gunma, 374-0019 (JP); Umewaka, Masahiro, Ota-shi (JP); Yamamoto, Hiroya, Gunma, 370-0521 (JP); Kobayashi, Kazuyuki, Nitta-gun, Gunma 379-2311 (JP)
(74) Representative: Cross, Rupert Edward Blount

(57) **Abstract**

In some preferred embodiments, in an authentication system including a plurality of portable devices and a base station, if the portable device is operated by an internal battery, ID data encrypted at a higher level are exchanged (normal mode), and if the portable device is operated by electromagnetic induction coupling with the base station, ID data encrypted at a lower level are exchanged (backup mode). These two communication modes are performed in the same communication device. The portable device transmits a signal showing a state of the battery voltage to the base station, and the portable device and the base station store the battery state in the respective storing portions. At the time of initiating communication, the portable device transmits a signal in the normal mode as first communication. If there is no response from the portable device, the portable device refers to the storing portion, and only if there is a portable device insufficient in voltage, the base station shifts communication in the backup mode.

## Description

### BACKGROUND OF THE INVENTION

### Field of the Invention

The present invention relates to an authentication system, a portable device, and a base station for use in the authentication system. Some preferred embodiments relate to an authentication system, a portable device and a base station for use in the authentication system.

### Description of the Related Art

The following description sets forth the inventors' knowledge of related art and problems therein and should not be construed as an admission of knowledge in the prior art.

One key entry systems that is known for automobiles is a keyless entry system. In this system, a desired operation, such as, e.g., a locking operation, an unlocking operation, or an engine start operation, is performed using electric waves or infrared rays in place of a mechanical operation such as an insertion operation of a key into a keyhole. Such a keyless entry system includes a portable device to be carried by an automobile owner and a base station mounted in an automobile. In some known keyless entry systems, a desired operation is performed by pressing a button of the portable device to transmit ID data from the portable device. On the other hand, in another keyless entry system, a desired operation can be performed after collating ID data between the portable device and the base station by simply bringing the portable device closer to a door or the like as a base station or pulling a door knob or the like to exchange ID data.

In such a keyless entry system, however, although a battery is built in the portable device to transmit/receive electric waves or infrared rays, when the battery capacity of this portable device deteriorates, it became impossible to perform any desired operation, causing inconvenience to the user. In view of the problem, in some systems, a portable device is powered by electromagnetic induction coupling in addition to a battery. In such a system, a user brings the portable device closer to the base station within a certain distance to generate a voltage by electromagnetic induction coupling of the coil installed in the portable device and the electromagnetic wave transmitted from the base station. By keeping the approached state for a certain period of time, the power required for transmitting the ID data is supplied to the portable device, whereby the portable device and the base station can exchange their ID data.

In a conventional method, it is proposed to provide a power supply system by a battery (hereinafter, "battery mode") and a power supply system by electromagnetic induction coupling (hereinafter, "electromagnetic induction mode") so that locking and unlocking operations can be performed even if the battery is dead.

Japanese Unexamined Laid-open Patent Publication No. 2001-115698 discloses prior art relevant to the present invention.

In a conventionally available keyless entry system, since an independent communication device is used for each of the battery mode and the electromagnetic induction mode, both modes are always in operating condition.

In cases where ID data are exchanged in the battery mode, sufficient power can be supplied. Therefore, the ID data can be exchanged while maintaining high security with advanced encryption. On the other hand, in cases where ID data is exchanged in an electromagnetic induction mode, since the power generation is slight and the power is supplied only for a certain period of time, minimum information is transmitted with simple encryption as compared with a battery mode. In this situation, even if advanced encryption can be performed in the battery mode, since the ID data exchange can be performed in the electromagnetic induction mode, low security level becomes dominant. That is, when a thief copies the keyless entry system in the electromagnetic induction mode, unlocking of the door can be attained easily, resulting in poor crime-prevention effect.

Furthermore, conventionally, in cases where communication in the electromagnetic induction mode is required due to insufficient battery voltage, etc., the user had to instruct the base station (e.g., a key system provided at the door side of an automobile) to transmit electric waves capable of establishing electromagnetic induction coupling with the portable device by a certain operation. Otherwise, in performing communication for authentication, the base station is always required to transmit electric waves capable of establishing electromagnetic induction coupling with the portable device, resulting in a waste of a time for authentication and a waste of a power.

The description herein of advantages and disadvantages of various features, embodiments, methods, and apparatus disclosed in other publications is in no way intended to limit the present invention. For example, certain features of the preferred embodiments of the invention may be capable of overcoming certain disadvantages and/or providing certain advantages, such as, e.g., disadvantages and/or advantages discussed herein, while retaining some or all of the features, embodiments, methods, and apparatus disclosed therein.

### SUMMARY OF THE INVENTION

The preferred embodiments of the present invention have been developed in view of the above-mentioned and/or other problems in the related art. The preferred embodiments of the present invention can significantly improve upon existing methods and/or apparatuses.

Among other potential advantages, some embodiments can provide an authentication system equipped with a portable device and a base station and having power supplying methods by a battery and electromagnetic induction and a switching sequence for switching power supplying methods and authentication schemes.

Among other potential advantages, some embodiments can provide a portable device for use in the authentication system.

Among other potential advantages, some embodiments can provide a base station for use in the authentication system.

According to a first aspect of a preferred embodiment of the present invention, an authentication system, comprising:
a base station; and
a portable device powered by electric power supply by a battery or electromagnetic induction coupling with the base station,
wherein the portable device includes:
   a detecting portion configured to detect a voltage of the battery;
   a storing portion configured to store data showing an ID code peculiar to the portable device;
   a transmitting portion configured to transmit a signal including the ID code, or the ID code and data showing a detection result of the detecting portion; and
   a receiving portion configured to receive a signal transmitted by the base station, and
   wherein the base station includes:
      a storing portion configured to store an ID code peculiar to the base station;
      a transmitting portion configured to transmit a signal including the ID code peculiar to the base station to the portable device;
      a receiving portion configured to receive the signal transmitted by the portable device; and
      a controlling portion configured to obtain data showing the ID code peculiar to the portable device or the detection result from the signal received by the receiving portion of the base station, wherein when the ID code peculiar to the portable device is obtained, the controlling portion of the base station collates the ID code peculiar to the portable device with the ID code peculiar to the base station and stores the data showing the detection result in the storing portion of the base station.

With this authentication system, communication using the electric power supply by a battery and the electric power supply by electromagnetic induction coupling can be performed by the same communication system. Furthermore, every time the portable device and the base station start communication, the portable device detects the battery status and transmits the detection result to the base station together with the ID code. Therefore, both the portable device and the base station can recognize the battery status of the portable device.

In the actual communication, in the first communication, the base station assuredly transmits the ID code in the normal mode, and waits for a response from the portable device. If no response can be obtained, the base station checks the non-volatile memory to confirm the current battery status of the portable device. Only if it is recognized that the battery performance of the portable device is deteriorated and the portable device is operated in the backup mode, the base station shifts the communication mode to a backup mode. Therefore, in the authentication system, so long as a user maintains the battery in a state in which sufficient voltage can be obtained, the backup mode low in security would not be used. Thus, high security status can be maintained.

When communication begins, the portable device transmits a signal in a normal mode as first communication. In cases where a user has two or more portable devices, it is possible to give priority to a portable device which can operate in a battery mode to operate the authentication operation, thereby shortening the time required for the authentication operation and reducing the power consumption.

In the authentication system, it can be configured such that the portable device further includes a controlling portion, wherein the controlling portion of the portable device and the controlling portion of the base station have a function of encrypting the ID code peculiar to the portable device and a function of the ID code peculiar to the base station, respectively, by a predetermined encryption scheme, and wherein the controlling portion of the portable device and the controlling portion of the base station each switches encryption schemes based on the data showing the detection result stored in respective storing portions.

In the authentication system, it can be configured such that, when data showing deterioration of battery performance of the portable device is stored in the storing portion of the base station, the control portion of the base station encrypts the ID code peculiar to the base portion by an encryption scheme requiring lower power consumption, and transmits a signal capable of establishing electromagnetic induction coupling with the portable device for a certain period of time before transmitting the encrypted ID code peculiar to the base station.

According to a second aspect of a preferred embodiment of the present invention, a portable device equipped with an encrypting portion for encrypting information peculiar to the portable device and configured to transmit the information encrypted by the encrypting portion to a base station wirelessly to authenticate between the portable device and the base station, the portable device, comprising:
a detecting portion configured to detect a power supplying voltage of the portable device;
a transmitting portion configured to transmit a detection signal of the detecting portion;
a receiving portion configured to receive an instruction signal for instructing the encrypting portion from the base station; and
a switching portion configured to switch encryption schemes based on the instruction signal.

According to a third aspect of a preferred embodiment of the present invention, a base station which receives encrypted information from a portable device wirelessly to authenticate between the base station and the portable device, the base station, comprising:
a receiving portion configured to receive a detection signal showing a power supply voltage level of the portable device from the portable device; and
a switching portion configured to switch transmission signals to be transmitted to the portable device depending on the detection signal.

In the base station, it can be configured such that the base station has encrypting portions configured to encrypt information peculiar to the base station, and wherein the switching portion switches the transmission signals by switching the encrypting portions.

In the base station, it can be configured such that the switching portion switches the transmission signals by adding a signal showing an encryption scheme to be employed by the portable device to the transmission signal.

In the base station, it can be configured such that the switching portion switches the transmission signals by adding an electric wave from which the portable device is capable of obtaining a power supply voltage by electromagnetic induction to the transmission signal.

In the portable device, it can be configured such that the encrypting portion includes a first encrypting portion for encrypting the information by a first encryption scheme, and a second encrypting portion for encrypting the information by a second encryption scheme.

In the base station, it can be configured such that the encrypting portion includes a first encrypting portion for encrypting the information by a first encryption scheme and a second encrypting portion for encrypting the information by a second encryption scheme.

In the portable device, it can be configured such that the encrypting portion includes a first encrypting portion for encrypting the information by a scheme requiring large power consumption and a second encrypting portion for encrypting the information by a scheme requiring less power consumption.

In the base station, it can be configured such that the encrypting portion includes a first encrypting portion for encrypting the information by a scheme requiring large power consumption and a second encrypting portion for encrypting the information by a scheme requiring less power consumption.

In the portable device, it can be configured such that the encrypting portion includes a plurality of encrypting portions different in power consumption.

In the base station, it can be configured such that the encrypting portion includes a plurality of encrypting portions different in power consumption.

According to a fourth aspect of a preferred embodiment of the present invention, a portable device equipped with an encrypting portion for encrypting information peculiar to the portable device and configured to authenticate between the portable device and a base station by transmitting the information encrypted by the encrypting portion to the base station, the portable device, comprising:
a power supply portion including a first power supply portion by a battery and a second power supply portion by electromagnetic induction; and
a storing portion for storing information peculiar to the portable device electrically,
wherein the encrypting portion includes a first encrypting portion for encrypting the information by a scheme requiring large power consumption and a second encrypting portion for encrypting the information by a scheme requiring less power consumption,
wherein the encryption is performed by the first encrypting portion when the portable device is powered by the first power supply portion, and
wherein the encryption is performed by the second encrypting portion when the portable device is powered by the second power supply portion.

According to a fifth aspect of a preferred embodiment of the present invention, a portable device equipped with an encrypting portion for encrypting information peculiar to the portable device and configured to authenticate between the portable device and a base station by transmitting the information encrypted by the encrypting portion to the base station, the portable device, comprising:
a power supply portion including a first power supply portion by a battery and a second power supply portion by electromagnetic induction,
wherein the portable device is configured to receive a signal for specifying the power supply portion of the portable device from the base station and switch the power supply portions based on the signal for specifying the power supply portion of the portable device.

The above and/or other aspects, features and/or advantages of various embodiments will be further appreciated in view of the following description in conjunction with the accompanying figures. Various embodiments can include and/or exclude different aspects, features and/or advantages where applicable. In addition, various embodiments can combine one or more aspect or feature of other embodiments where applicable. The descriptions of aspects, features and/or advantages of particular embodiments should not be construed as limiting other embodiments or the claims.

### BRIEF DESCRIPTION OF THE DRAWINGS

The preferred embodiments of the present invention are shown by way of example, and not limitation, in the accompanying figures, in which:
Fig. 1 is a schematic block diagram of an authentication system including a portable device and a base station according to an embodiment of the present invention;
Fig. 2 is a flowchart showing the operation of the authentication system;
Fig. 3 is a flowchart continued from Fig. 2;
Fig. 4 is a flowchart continued from Fig. 3;
Fig. 5 is an explanatory view showing the operation of the authentication system;
Fig. 6 is an explanatory view showing the operation of the authentication system; and
Fig. 7 is an explanatory view showing the operation of the authentication system.

### DETAILED DESCRIPTION OF THE PREFERRED EMBODIMENTS

In the following paragraphs, some preferred embodiments of the invention will be described by way of example and not limitation. It should be understood based on this disclosure that various other modifications can be made by those in the art based on these illustrated embodiments.

An authentication system according to preferred embodiments of the present invention will be explained with reference to the attached drawings. The following explanation will be directed to an authentication system for a keyless entry system for automobiles. However, it should be understood that this authentication system is not limited to the above and can also be applied to various applications.

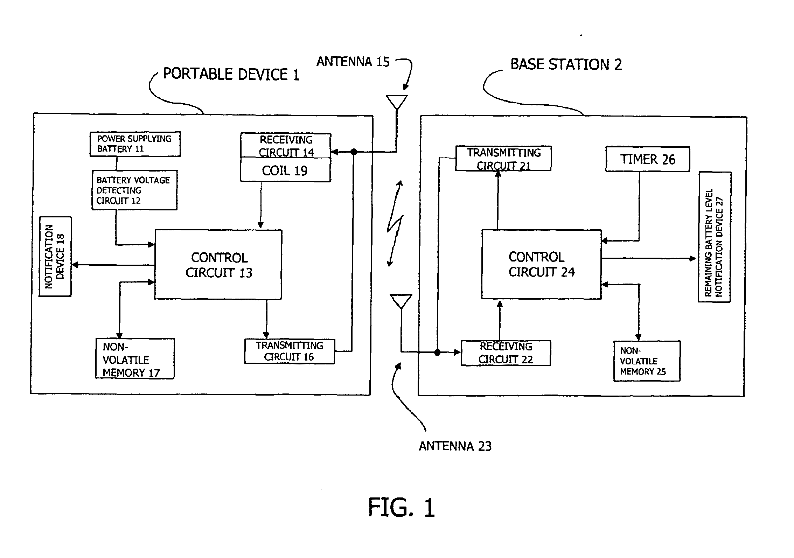

Fig. 1 depicts a block diagram of an authentication system according to an embodiment of this invention. This system includes a portable device 1 and a base station 2. The base station 2 is equipped in a door of an automobile, etc.

The portable device 1 includes a power supplying battery 11, a battery voltage detecting circuit 12, a control circuit 13, a receiving circuit 14, an antenna 15, a transmitting circuit 16, a non-volatile memory 17, a notification device 18, and a coil 19. The portable device 1 can be powered by both the battery 11 and an electric power supply from the coil 19 integrated unlike in a conventional portable device.

The non-volatile memory 17 stores an ID code A peculiar to the portable device 1 and data for specifying a communication mode for the portable device 1, and the control circuit 13 can encrypt the ID code A in accordance with the communication mode. The control circuit 13 controls the transmitting circuit 16 and the non-volatile memory 17 as follows based on the data inputted from the receiving circuit 14 and the battery voltage detecting circuit 12.

Initially, the receiving circuit 14 receives an ID code B peculiar to the base station 2, data for establishing electromagnetic induction coupling with the portable device 1, and data for specifying a communication mode from the base station 2 via the antenna 15. When the coil 19 of the receiving circuit 14 receives the data for electromagnetic induction, the coil 19 generates an electric power by electromagnetic induction effects to power the control circuit 13. The ID code B of the base station 2 and the data for specifying a communication mode are sent to the control circuit 13. The control circuit 13 separates the ID code B from the received data, and collates the separated ID code B of the base station 2 with the ID code A of the portable device 1 stored in the non-volatile memory 17.

When it is confirmed that both the ID codes A and B match, the ID code A is read out from the non-volatile memory 17, and the ID code A is encrypted in accordance with the communication mode stored in the non-volatile memory 17. If the data received from the base station 2 includes data for specifying a communication mode, the data is stored in the non-volatile memory 17.

On the other hand, the battery voltage detecting circuit 12 detects the voltage of the power supplying battery 11, and outputs the detection result to the control circuit 13. As the power supplying battery 11, a life limited battery, such as, e.g., a lithium ion battery, is generally used. However, a rechargeable battery capable of charging an electric power by electromagnetic induction coupling with the base station 2 can be used. When the control circuit 13 receives data showing the voltage reduction of the power supplying battery 11 from the battery voltage detecting circuit 12, the control circuit 13 adds this data to the encrypted ID code A. At this time, the control circuit 13 makes the non-volatile memory 17 store the data showing the voltage reduction. The control circuit 13 transmits the data prepared as mentioned above to the transmitting circuit 16. The transmitting circuit 16 transmits the data prepared by the control circuit 13 to the base station 2 based on the instruction from the control circuit 13. After completion of the data transmission by the transmitting circuit 16, the control circuit 13 makes the notification device 18 made of light emitting elements, such as an LED, turn on to notify the user that the voltage of the power supplying battery 11 is enough and the data transmission has been completed.

On the other hand, the base station 2 includes a transmitting circuit 21, a receiving circuit 22, an antenna 23, a control circuit 24, a non-volatile memory 25, a timer 26, and a remaining battery level notification device 27. The non-volatile memory 25 stores the ID code B of the base station 2 and the data showing the communication mode of the portable device 1.

The control circuit 24 decodes the encrypted ID code A of the portable device 1 obtained via the receiving circuit 22, and collates the decoded ID code A with the ID code B of the base station 2 stored therein. The timer 26 measures the elapsed time from when the data was transmitted to the portable device 1 by the transmitting circuit 21, and predetermined data is given to the control circuit 24 after a certain period of time has passed. The control circuit 24 firstly discriminates whether data was obtained from the portable device 1 within the time set by the timer 26, secondly discriminates whether, if obtained, data showing the voltage reduction of the power supplying battery 11 is included in the data from the portable device 1, thirdly prepares data in which data for specifying a communication mode of the portable device 1 is added to the encrypted ID code B of the base station 2 based on the data showing the communication mode of the portable device 1 stored in the non-volatile memory 25 and makes the transmitting circuit 21 transmit the data.

In accordance with an instruction from the control circuit 24, the transmitting circuit 21 transmits data for electromagnetic induction for a certain period of time immediately before the transmission of the data prepared by the control circuit 24. In addition, if the data showing the voltage reduction of the power supplying battery 11 is included in the data from the portable device 1 obtained via the receiving circuit 22, the control circuit 24 makes the remaining battery level notification device 27 turn on to notify the user.

Based on the instructions of the control circuit 24, the base station 2 can select one of two communication modes, and can change the contents of the data to be transmitted. These two communication modes include a normal mode and a backup mode. At the time of the communication in the normal mode, the ID code and the data showing the communication mode and the voltage reduction of the power supplying battery 11 are transmitted to the portable device 1. On the other hand, at the time of the communication in the backup mode, in addition to the data to be transmitted in the normal mode, data capable of establishing electromagnetic induction coupling with the portable device 1 is transmitted to the portable device 1. In details, in some methods, data capable establishing electromagnetic induction coupling with the portable device 1 is transmitted to the portable device 1 for a certain period of time immediately before transmitting the ID code B.

In a keyless entry system, encrypted ID codes are exchanged. In some encryption methods, after adding key data of a fixed number of bits to ID code data, the data is shuffled based on a certain algorithm to randomize the data. In this method, as the number of bits and the number of shuffling increase, the security level is enhanced. In cases where the key data is long or the number of shuffling is large, however, since it takes a longer time to receive or decode the data, considerable power will be required.

Therefore, since the power supplying battery 11 of the portable device 1 can supply sufficient electric power to the control circuit 13 at the time of the communication in the normal mode, advanced randomization is performed by adding key data of the long number of bits and/or increasing the number of shuffles. On the other hand, at the time of the communication in the backup mode, randomization is performed by adding key data of a short number of bits and/or decreasing the number of shuffles.

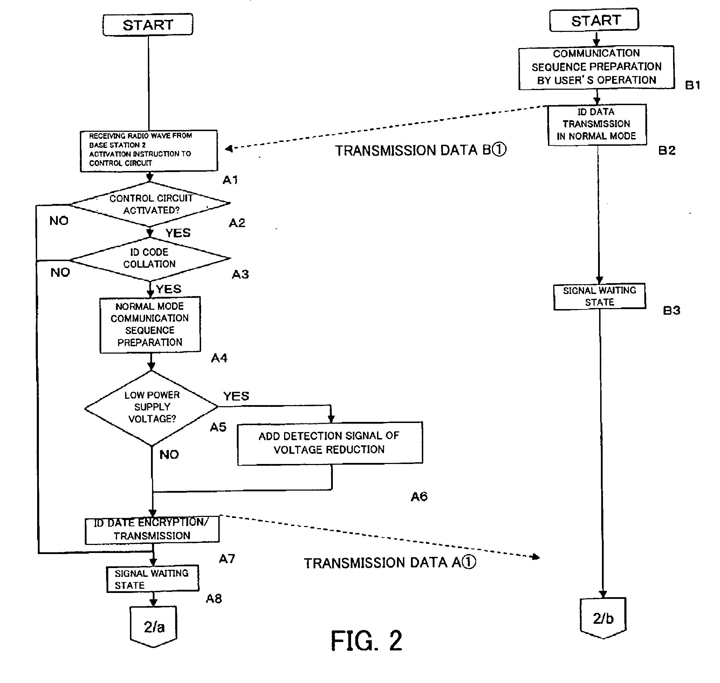

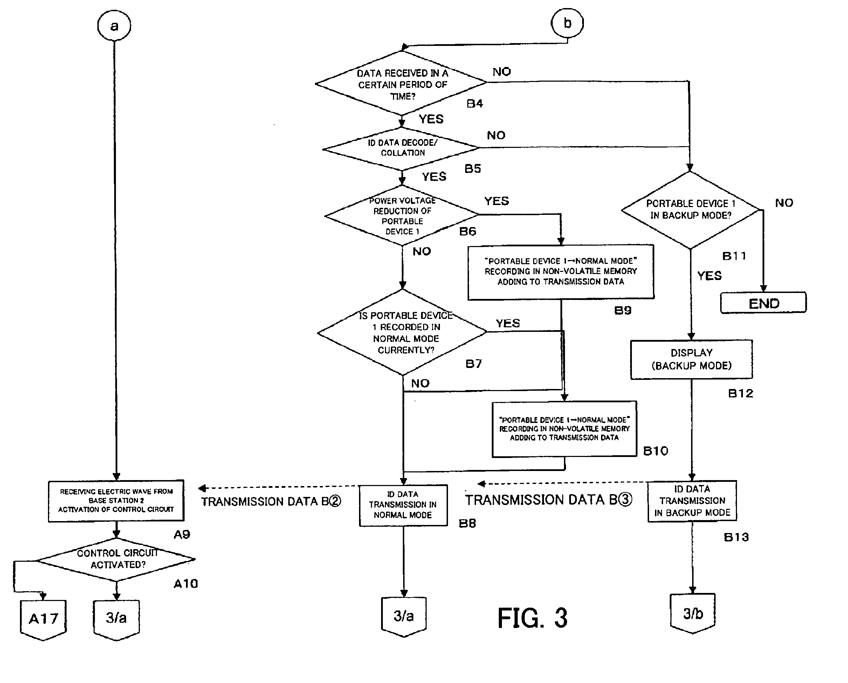

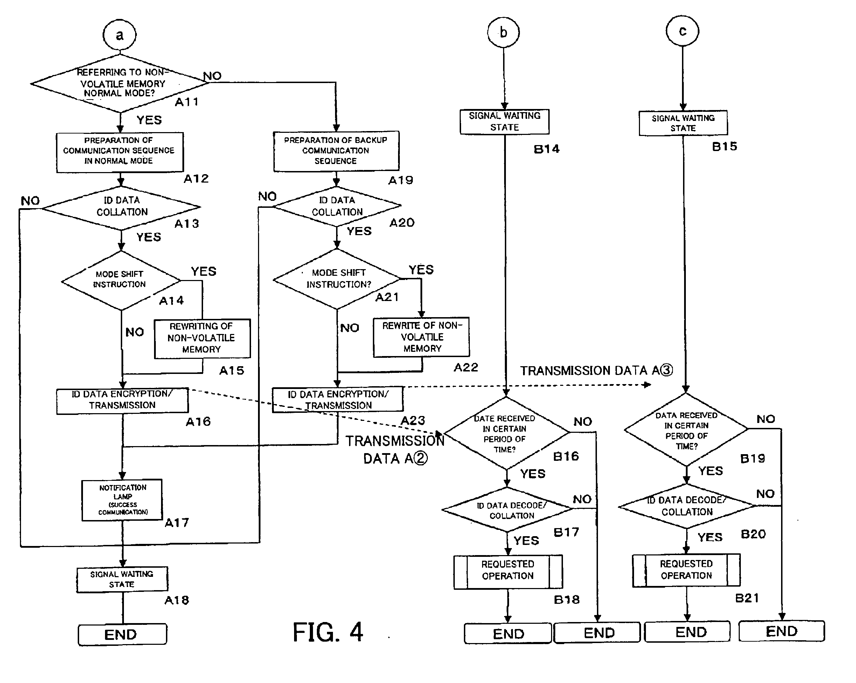

Next, the data exchange operation between the portable device 1 and the base station 2 will be explained with reference to the flow chart shown in Figs. 2 to 4.

Initially, a user makes the base station 2 prepare a communication sequence by a certain operation. The examples of this operation include an operation of pulling a doorknob and an operation of turning a doorknob (Step B1). The base station 2 prepares the communication sequence in the normal mode in accordance with the operation B1, and at the next step the base station 2 transmits transmission data B① consisting of data of the ID code B of the base station 2 stored in the non-volatile memory 25 to the portable device 1 (Step B2). It is possible to eliminate such a user's operation by transmitting electric waves at certain intervals towards the portable device 1 using a timer provided in the base station 2. At Step B3 and thereafter, the base station 2 goes into a signal waiting state waiting for a signal from the portable device 1, and the timer 26 starts the time measurement (Step B3).

To save the battery life, the portable device 1 is designed such that the portable device 1 waits for a signal from the base station 2 with only the receiving circuit 14 activated in a non-communication state and the receiving circuit 14 sends data for activating the control circuit 13 when the receiving circuit 14 receives electric waves exceeding a certain level. After receiving data from the receiving circuit 14, the control circuit 13 is activated by the voltage supply from the power supplying battery 11. Furthermore, in cases where sufficient voltage supply is not available because of the deteriorated performance of the power supplying battery 11, the coil 19 of the receiving circuit 14 receives the data for electromagnetic induction from the base station 2 to generate a voltage by which the control circuit 13 is activated. In this embodiment, by receiving the transmission data B① from the base station 2 at the receiving circuit 14, the control circuit 13 is activated (Step A1).

At this time no data for electromagnetic induction is included in this transmission data B①. Therefore, if the control circuit 13 is not activated at Step A1, it means that the battery of the portable device 1 cannot supply sufficient power and communication in the normal mode cannot be established. Accordingly, in this case, only the receiving circuit 14 is kept in an activated state and waits for a signal from the base station 2 (Step A8). If the control circuit 13 is activated, the control circuit 13 collates the transmission data B① transmitted from the base station 2 with the ID code A of the portable device 1 (Step A3). When it is confirmed that both ID codes match, the portable device 1 prepares communication in the normal mode (Step A4).

Next, the battery voltage detecting circuit 12 detects the voltage of the power supplying battery 11 (Step A5). If it is detected that the voltage is low, after receiving the data showing the voltage reduction from the battery voltage detecting circuit 12, the control circuit 13 adds data for instructing an execution in the backup mode from the next communication to the ID code A (Step A6), encrypts the data in accordance with the normal mode, and then transmits transmission data A① to the base station 2 (Step A7).

If it is not judged that the battery voltage is low at Step A5, the transmission data A① is transmitted to the base station 2 without adding data for instructing the communication mode shift (Step A7). Thereafter, the portable device 1 keeps the state in which only the receiving circuit 14 is activated and waits for a signal from the base station 2 (Step A8). Returning to Step A2, if the transmission data B① transmitted from the base station 2 and the ID code A of the portable device 1 do not match, the portable device 1 remains the signal waiting state of Step A8 without transmitting the transmission data A①.

Next, if the base station 2 receives the transmission data A① from the portable device 1 within a certain period of time measured by the timer 26 (Step B4), the control circuit 24 decodes the transmission data A① in the normal mode, and collates the obtained ID code A of the portable device 1 with the ID code B of the base station 2 (Step B5). If both the ID codes do not match, the control circuit 24 discriminates whether data showing the voltage reduction of the power supplying battery 11 of the portable device 1 is included in the data received from the portable device 1 (Step B6). If the voltage of the power supplying battery 11 of the portable device 1 is not low, the control circuit 24 accesses the non-volatile memory 25 to read out the data showing the communication mode of the portable device 1 stored in the non-volatile memory 25 and discriminates whether the portable device 1 is in the normal mode (Step B7).

If it is judged that the portable device 1 is in the normal mode at Step B7, the control circuit 24 encrypts the data only including the ID code B of the base station 2 in the normal mode, and transmits the transmission data B② to the portable device 1 (Step B8).

If it is discriminated that the voltage of the power supplying battery 11 of the portable device 1 is low at step B6, the control circuit 24 decides to make the portable device 1 shift to the backup mode, and accesses the non-volatile memory 25 to store the data showing that the portable device 1 shifts to the backup mode (Step B9). Subsequently, the control circuit 24 prepares data in which data for instructing the shift to the backup mode from the next time is added to the ID code B of the base station 2 (Step B9), encrypts the data in the normal mode, and then transmits the encrypted data to the portable device 1 via the transmitting circuit 21 as the transmission data B② (Step B8).

At Step B7, if the information that the portable device 1 is in the backup mode is written in the non-volatile memory 25, it is assumed that the previous communications were performed in the backup mode but the power supplying voltage of the portable device 1 has been restored by replacing the battery with a new one or charging the battery in this time. Therefore, the control circuit 24 decides to shift the current mode to the normal mode, accesses the non-volatile memory 25 to store the data showing that the portable device 1 shifts the current mode to the normal mode (Step B10). Subsequently, the control circuit 24 prepares the transmission data B② in which the data for instructing the mode shift to the normal mode is added to the ID code B of the base station 2, and transmits the data B② to the portable device 1 via the transmitting circuit 21 (Step B8).

By the way, if no data is received for a certain period of time at Step B4, and if collating the transmission data A① received from the portable device 1 with the ID code B of the base station 2 fails at Step B5, the control circuit 24 discriminates whether it is stored that the portable device 1 is in the backup mode at this point by referring to the non-volatile memory 25 (Step B11). If it is discriminated that it is stored that the portable device 1 is not in the backup mode but in the normal mode, the base station 2 goes into an idle state because of the following reasons. That is, it can be considered that the person operated at Step A1 is not the owner of the portable device 1 or that the portable device normally worked at the time of the previous communication became impossible to perform a normal communication due to, e.g., malfunction.

At Step B11, if the control circuit 24 discriminates that the portable device 1 is in operation in the backup mode as a result of referring the non-volatile memory 25, it is considered that the user is an owner of the portable device 1 and it couldn't answer due to the shortage of the power supplying battery 11. Accordingly, the control circuit 24 makes the remaining battery level notification device 27 turn on to notify the user that communication in the backup mode is required (Step B12). Thereafter, the control circuit 24 prepares data transmission in the backup mode, and transmits the transmission data B③ in which data for electromagnetic induction is added in front of the ID code B of the base station 2 (Step B13). After transmitting the transmission data B② or B③ to the portable device 1, the base station 2 goes into a signal waiting state waiting for a signal from the portable device 1, and makes the timer 26 start the time measurement (Step B14 and B15).

On the other hand, the receiving circuit 14 of the portable device 1 receives the transmission data B② or B③ from the base station 2, and receives electric power supply from the power supplying battery 11, whereby the control circuit 13 is activated (Step A9). If the power supplying battery 11 is insufficient in capacity, since the power supply voltage reduction is already detected at Step A5 and the base station 2 performs the communication in the backup mode according to the transmission data A① from the portable device 1, a voltage is generated by the electromagnetic induction coupling with the coil 19, and therefore a power can be supplied to the control circuit 13. If the data cannot be received in the backup mode, it is regarded as malfunction, and therefore the portable device 1 goes into a state in which only the receiving circuit 14 is activated as a signal waiting state waiting for a signal from the base station 2, and the flow of the portable device 1 terminates (Step A18).

Next, the activated control circuit 13 refers to the non-volatile memory 17 (Step A11). If it is recorded that the portable device 1 operates in the normal mode at this time, the control circuit 13 prepares the communication sequence in the normal mode (Step A12). Next, the control circuit 13 collates the ID code B of the base station 2 included in the transmission data B② with the ID code A of the portable device 1 (Step A13). If it is discriminated that both ID codes do not match, the control circuit 13 further discriminates whether data for instructing a mode shift is included in the transmission data B② received from the base station 2 (Step A14).

If data for instructing a mode shift is included, after rewriting the non-volatilized memory 17 in accordance with the instruction of the base station 2 (Step A15), the control circuit 13 encrypts the ID code A of the portable device 1 in accordance with the normal mode, and transmits transmission data A② (Step A16). On the other hand, if it is discriminated that data for instructing a mode shift is not included, the control circuit 13 transmits transmission data A② to the base station 2 without performing writing to the non-volatile memory (Step A16). After the transmission, the control unit 13 makes the notification device 18 turn on to notify the user of the data transmission completion (Step A17). Thereafter, the portable device 1 goes into a state in which only the receiving circuit 14 is activated as a signal waiting state waiting for a signal from the base station 2, and the flow of the portable device 1 terminates (Step A18).

If the ID code B of the base station 2 included in the transmission data B② and the ID code A of the portable device 1 does not match at Step A13, it means that the matching of the ID codes of the portable device 1 and the base station 2 was confirmed at the first communication but mismatching occurred at the second communication. Therefore, in this case, it is considered that the portable device 1 and/or the base station 2 is in malfunction, such as a functional failure, and therefore the portable device 1 goes into a state in which only the receiving circuit 14 is activated as a signal waiting state waiting for a signal from the base station 2 (Step A18), and the flow of a portable device 1 terminates.

Furthermore, at Step A11, if it is stored that the portable device 1 operates in the backup mode, after preparing the communication sequence in the backup mode (Step A19), the control circuit 13 collates the ID code B of the base station 2 included in the transmission data B③ with the ID code A of the portable device 1 (Step A20).

Next, if the matching of the ID codes is confirmed at Step A20, the control circuit 13 further discriminates whether data for instructing a mode shift is included in the transmission data B③ received from the base station 2 (Step A21). If the data for instructing a mode shift is included, after rewriting the non-volatilized memory 17 in accordance with the instruction of the base station 2 (Step A22), the control circuit 13 encrypts the ID code A of the portable device 1 in the backup mode, and transmits transmission data A@ (Step A23). If it is discriminated that the data for instructing a mode shift is not included, the control circuit 13 transmits transmission data A@ to the base station 2 without performing the writing to the non-volatile memory (Step A23). After the transmission, the portable device 1 goes into a state in which only the receiving circuit 14 is activated as a signal waiting state waiting for a signal from the base station 2 (Step A18), and the flow of a portable device 1 terminates.

If it is discriminated that the ID codes do not match at Step A20, it means that the matching of the ID codes of the portable device 1 and the base station 2 was confirmed at the first communication but mismatching occurred at the second communication. Therefore, in this case, it is considered that the portable device 1 and/or the base station 2 is in malfunction, such as a functional failure, and therefore the portable device 1 goes into a state in which only the receiving circuit 14 is activated as a signal waiting state waiting for a signal from the base station 2 (Step A18), and the flow of a portable device 1 terminates.

Next, if the transmission data A② from the portable device 1 is received within a certain period of time measured by the timer 26 at Step B16, the control circuit 24 decodes the transmission data A@ received from the portable device 1, and collates the ID code A of the portable device 1 with the ID code B of the base station 2 (Step B17). If it is discriminated that the ID codes match, the base station 2 performs operations, such as, e.g., a locking operation, an unlocking operation or an engine start operation, as requested by the user (Step B18). In cases where no reply signal is received from the portable device 1 or it is discriminated that the ID codes do not match, the operation of the base station 2 is terminated.

On the other hand, if the transmission data A@ from the portable device 1 is received within a certain period of time measured by the timer 26 at Step B19, the control circuit 24 decodes the transmission data A③ received from the portable device 1, and collates the ID code A of the portable device 1 with the ID code B of the base station 2 (Step B20). If it is discriminated that the ID codes match, the base station 2 performs an operation, such as, e.g., a locking operation, an unlocking operation, or an engine start operation, as requested by the user (Step B21). In cases where no reply signal is received from the portable device 1 or it is discriminated that the ID codes do not match, an operation of the base station 2 is terminated.

The sequence of the authentication system according to an embodiment of this invention was explained above with reference to the flowchart shown in Figs. 2 to 4.

Now, an explanation is given to the bit length of the transmission data. First, at Step A6, since the detection signal of the power supply voltage is added, the bit length of the transmission data A① becomes long. Furthermore, at Step B9 and Step B10, since the instruction signal of the communication mode shift is added, the bit length of the transmission data B② becomes long.

In the case of making the bit length of the transmission data constant, it is preferable that the detection result of the power supply voltage and the instruction contents of the communication mode shift are transmitted by forming a fixed bit width as a command portion and changing the data of the command portion. For example, if the command portion of the communication mode is 1100, the communication mode is not changed, but if it is 0011, the mode shift is instructed. Moreover, as to the detection signal, it can be considered to provide a command portion of a fixed bit width in the same manner.

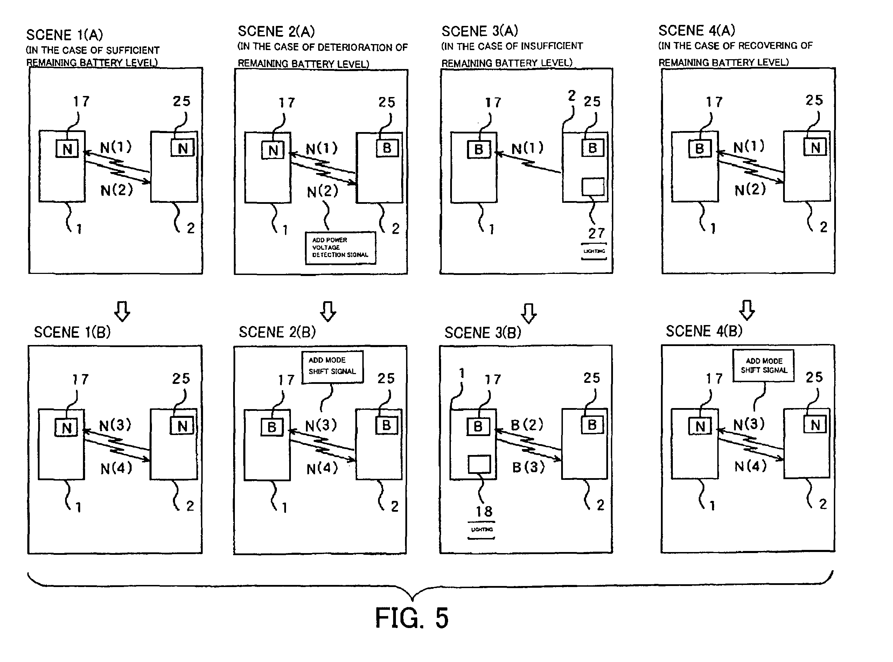

Next, with reference to Fig. 5, the operation of the authentication system depending on the user's operating conditions will be explained. The reference letters "N" and "B" shown along with the electric wave by an arrow between the portable device and the base station denote that a signal is being received/transmitted in the normal mode and in the backup mode, respectively. The reference numeral in the parenthesis denotes the sequence of the signal to be transmitted. Furthermore, the reference numeral "N" and "B" shown in the box also denote that the data showing the same communication mode is being written in the storing portion.

In the Scene 1, the voltage of the power supplying battery of the portable device 1 is kept full. First, a first data exchange in the normal mode is performed (See Scene 1(A)). Subsequently, a second data exchange for exchanging ID codes is performed in the normal mode again, and the base station 2 operates an unlocking operation, etc. (See Scene 1(B))

Next, in the Scene 2, the case in which the voltage of the power supplying battery of the portable device 1 falls below the stipulated value will be explained. Initially, a first data exchange in the normal mode is performed. Since the voltage reduction of the power supplying battery is detected by the detecting circuit at this time, a detection signal showing battery deterioration is added to the transmission data from the portable device 1. Upon receipt of the detection signal by the base station 2, the storing portion 25 of the base station 2 is rewritten so that data showing the shift to the backup mode is written in the storing portion 25 (See Scene 2(A)). Subsequently, a second data exchange for exchanging ID codes is performed in the normal mode again, and the base station 2 operates an unlocking operation, etc. At this time, data showing a mode shift is added to the transmitting signal from the base station 2, and the storing portion 17 of the portable device 1 is rewritten to the backup mode (See Scene 2(B)).

In the Scene 3, the case in which the power supplying battery of the portable device 1 is further exhausted will be explained. In the same manner as in Scenes 1 and 2, although a first transmission of the ID code from the base station 2 in the normal mode is performed, since the power supplying battery 11 of the portable device 1 is exhausted, a response signal will not be transmitted from the portable device 1. If no reply signal is acquired from the portable device 1, the base station 2 discriminates whether the portable device 1 has currently shifted to the backup mode by referring to the storing portion 25. In this embodiment, it is recognized that the portable device 1 is in the backup mode. Therefore, the base station 2 makes the notification device 27 turn on to request the user to perform any act for performing communication in the backup mode, such as, e.g., an act of bringing the portable device 1 closer to the base station 2. (See Scene 3(A)) Next, the base station 2 and the portable device 1 perform data exchange in the backup mode, and the base station 2 operates an unlocking operation, etc. After completion of the data exchange, the portable device 1 makes the notification device 18 turn on to notify the user of the completion of authentication. (See Scene 3(B)) If security is weighted, it is preferable not to notify the user by the lighting of the notification device 27. Moreover, in Scene 3(B), it can be considered to give a preliminary notice of the shifting to the backup mode from next time.

In the meantime, in cases where the authentication system is used as a keyless entry system for automobiles, a spare key is needed. In some cases, two or more portable devices are provided to one base station. In such a case in which plural portable devices exist, the storing portion 25 of the base station 2 is provided with storing regions corresponding to the number of portable devices. In such a case in which two or more portable devices exist and no response from the portable device is obtained, the base station 2 discriminates whether the portable device which has currently shifted to the backup mode exists by referring the storing portion 25. In other words, only if it is discriminated that all of the portable devices are in the normal mode, the base station suspends the operation. To the contrary, if there exists even one portable device which is stored as being in the backup mode, the base station 2 shifts to the communication in the backup mode because it is impossible for the base station 2 to discriminate that the user is using which portable device and trying to establish authentication since no response signal is transmitted from the portable device 1.

In the Scene 4, the case in which the power supplying battery of the portable device 1 is restored will be explained. Initially, first ID code data is transmitted in the normal mode from the base station 2. Since the battery of the portable device 1 is restored, in response to the signal from the base station 2, a signal is transmitted in the normal mode from the portable device 1. The base station 2 receives a reply signal from the portable device 1. Since a reply signal is acquired, the base station 2 discriminates that the battery of the portable device 1 has been restored, and accesses the storing portion 25 to rewrite the data into data showing the shift to the normal mode. (See Scene 4(A)) Subsequently, second exchanging of ID code data in the normal mode is performed, and the base station 2 operates an unlocking operation, etc. At this time, data showing the mode shift has been added to the transmission signal from the base station 2. The portable device 1 receives the data showing a mode shift from the received signal and rewrites the storing portion 17 into the normal mode.

As explained in the Scene 2, the voltage detection means detects the deterioration of voltage to generate a detection signal. However, in order to detect the voltage reduction, it is necessary to set a threshold of the voltage. The set of the threshold will be explained below.

Initially, in the following example, it is assumed that the power supplying battery is exhausted by natural discharge, etc., and the remaining capacity becomes zero (Scene 3) from the state in which the voltage is maintained above the threshold (Scene 1) and that a user did not use the portable device 1 even once during the time. Such a situation correspond to, e.g., the case in which the user has not used the portable device because of a long absence, etc, or the case in which the portable device is a spare key which has been stored for a long period of time without using.

In this case, the portable device 1 cannot notify the base portion 2 of the deterioration of the remaining battery level, and therefore the storing portion 25 of the base station 2 cannot be rewritten. As a result, in Scene 3(B), the signal will not be transmitted from the base station 2 in the backup model 2, and therefore an unlocking operation cannot be performed. Such a fault can be prevented by setting the threshold of voltage appropriately. That is, in cases where the battery capacity is small, the power consumption is large, or the frequency of usage of the user's portable device is low, a relatively high voltage is set as the threshold so that the shifting to the backup mode can be performed as earlier as possible.

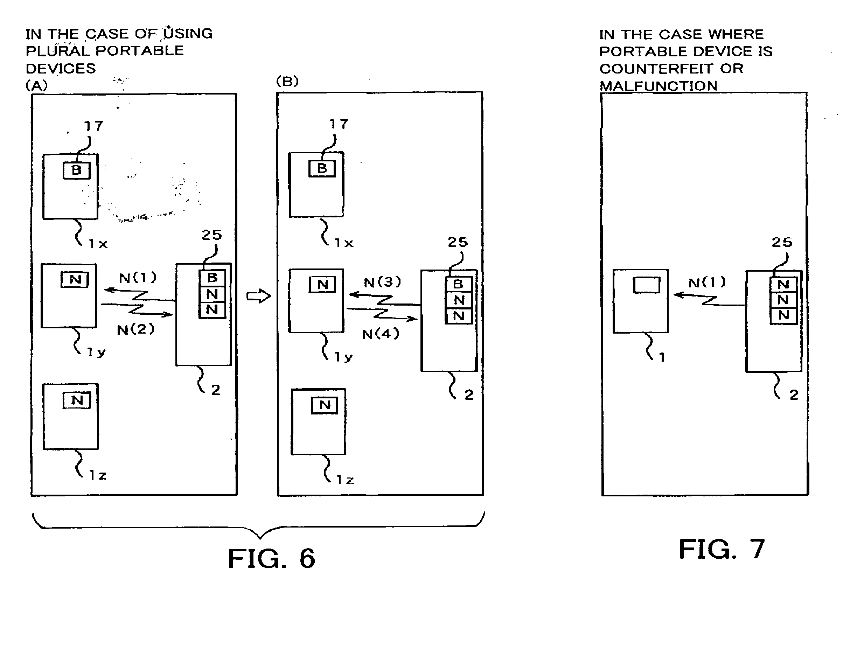

Next, in the keyless entry system for automobiles etc., the case in which a user has a plurality of portable devices 1x to 1z, and authenticates by bringing them closer to the base station 2 will be explained with reference to Fig. 6. For example, this situation is considered to be the case in which a user happens to have another portable device as a spare key in addition to a main portable device or family members having respective spare keys are going to authenticate simultaneously.

Although the remaining battery level of the portable device 1x is zero (equivalent to the Scene 3 in Fig. 5), the user has a portable device 1y of a sufficient remaining battery level. Since the base station 2 transmits a signal in the normal mode in the first communication, the portable device 1y responses and transmits a reply signal. Subsequently, a second data exchange is performed between the base station 2 and the portable device 1y, and an unlocking operation is performed.

For the communication in the backup mode, a time longer than in the normal mode is required. As will be apparent from the above explanation, in the first communication, since the base station 2 transmits a signal in the normal mode, it becomes possible to give priority to and choose the portable device capable of performing communication in the normal mode. Thus, the time for the authentication can be reduced.

Moreover, the case in which a user's portable device 1 do not respond to the signal from the base station 2 due to forgery or failure for a certain period of time will be explained with reference to Fig. 7. The base station 2 never transmits a signal in the backup mode unless a portable device 1 stored as being in the backup mode exists. Therefore, it is possible to minimize the leaking of the signal encrypted in the backup mode low in security, resulting in enhanced security.

Furthermore, in order to secure the security, even if there exists a portable device stored as being in the backup mode, it is preferable to transmit a signal in the normal mode multiple times from the base station 2 and wait for a response from the portable device for a longer time. To the contrary, in cases where only one portable device exists and a user never use a plurality of portable devices as shown in Fig. 6, if the storing portion of the base station 2 stores the base station 2 as being in the backup mode, it is possible to perform communication in the backup mode from the first time communication. In this case, although security is not secured, a time for authentication can be reduced.

Moreover, as another method for securing security, it is possible to set the voltage threshold of the voltage detection means lower. By setting the threshold lower, in the storing portion corresponding to each portable device, a time for storing the backup mode can be decreased, and therefore it becomes possible to reduce the frequency of usage of the backup mode.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.
42

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." In this disclosure and during the prosecution of this application, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited. In this disclosure and during the prosecution of this application, the terminology "present invention" or "invention" is meant as an non-specific, general reference and may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure and during the prosecution of this case, the following abbreviated terminology may be employed: "e.g." which means "for example;" and "NB" which means "note well."

## Claims

1. An authentication system, comprising:
a base station; and
a portable device powered by electric power supply by a battery or electromagnetic induction coupling with the base station,
wherein the portable device includes:
a detecting portion configured to detect a voltage of the battery;
a storing portion configured to store data showing an ID code peculiar to the portable device;
a transmitting portion configured to transmit a signal including the ID code, or the ID code and data showing a detection result of the detecting portion; and
a receiving portion configured to receive a signal transmitted by the base station, and
wherein the base station includes:
a storing portion configured to store an ID code peculiar to the base station;
a transmitting portion configured to transmit a signal including the ID code peculiar to the base station to the portable device;
a receiving portion configured to receive the signal transmitted by the portable device; and
a controlling portion configured to obtain data showing the ID code peculiar to the portable device or the detection result from the signal received by the receiving portion of the base station, wherein when the ID code peculiar to the portable device is obtained, the controlling portion of the base station collates the ID code peculiar to the portable device with the ID code peculiar to the base station and stores the data showing the detection result in the storing portion of the base station.

2. The authentication system as recited in claim 1, wherein the portable device further includes a controlling portion, wherein the controlling portion of the portable device and the controlling portion of the base station have a function of encrypting the ID code peculiar to the portable device and a function of the ID code peculiar to the base station, respectively, by a predetermined encryption scheme, and wherein the controlling portion of the portable device and the controlling portion of the base station each switches encryption schemes based on the data showing the detection result stored in respective storing portions.

3. The authentication system as recited in claim 2, wherein, when data showing deterioration of battery performance of the portable device is stored in the storing portion of the base station, the control portion of the base station encrypts the ID code peculiar to the base portion by an encryption scheme requiring lower power consumption, and transmits a signal capable of establishing electromagnetic induction coupling with the portable device for a certain period of time before transmitting the encrypted ID code peculiar to the base station.

4. A portable device equipped with an encrypting portion for encrypting information peculiar to the portable device and configured to transmit the information encrypted by the encrypting portion to a base station wirelessly to authenticate between the portable device and the base station, the portable device, comprising:
a detecting portion configured to detect a power supplying voltage of the portable device;
a transmitting portion configured to transmit a detection signal of the detecting portion;
a receiving portion configured to receive an instruction signal for instructing the encrypting portion from the base station; and
a switching portion configured to switch encryption schemes based on the instruction signal.

5. A base station which receives encrypted information from a portable device wirelessly to authenticate between the base station and the portable device, the base station, comprising:
a receiving portion configured to receive a detection signal showing a power supply voltage level of the portable device from the portable device; and
a switching portion configured to switch transmission signals to be transmitted to the portable device depending on the detection signal.

6. The base station as recited in claim 5, wherein the base station has encrypting portions configured to encrypt information peculiar to the base station, and
wherein the switching portion switches the transmission signals by switching the encrypting portions.

7. The base station as recited in claim 5, wherein the switching portion switches the transmission signals by adding a signal showing an encryption scheme to be employed by the portable device to the transmission signal.

8. The base station as recited in claim 5, wherein the switching portion switches the transmission signals by adding an electric wave from which the portable device is capable of obtaining a power supply voltage by electromagnetic induction to the transmission signal.

9. The portable device as recited in claim 4, wherein the encrypting portion includes a first encrypting portion for encrypting the information by a first encryption scheme, and a second encrypting portion for encrypting the information by a second encryption scheme.

10. The base station as recited in claim 6, wherein the encrypting portion includes a first encrypting portion for encrypting the information by a first encryption scheme and a second encrypting portion for encrypting the information by a second encryption scheme.

11. The portable device as recited in claim 4, wherein the encrypting portion includes a first encrypting portion for encrypting the information by a scheme requiring large power consumption and a second encrypting portion for encrypting the information by a scheme requiring less power consumption.

12. The base station as recited in claim 6, wherein the encrypting portion includes a first encrypting portion for encrypting the information by a scheme requiring large power consumption and a second encrypting portion for encrypting the information by a scheme requiring less power consumption.

13. The portable device as recited in claim 4, wherein the encrypting portion includes a plurality of encrypting portions different in power consumption.

14. The base station as recited in claim 6, wherein the encrypting portion includes a plurality of encrypting portions different in power consumption.

15. A portable device equipped with an encrypting portion for encrypting information peculiar to the portable device and configured to authenticate between the portable device and a base station by transmitting the information encrypted by the encrypting portion to the base station, the portable device, comprising:
a power supply portion including a first power supply portion by a battery and a second power supply portion by electromagnetic induction; and
a storing portion for storing information peculiar to the portable device electrically,
wherein the encrypting portion includes a first encrypting portion for encrypting the information by a scheme requiring large power consumption and a second encrypting portion for encrypting the information by a scheme requiring less power consumption,
wherein the encryption is performed by the first encrypting portion when the portable device is powered by the first power supply portion, and
wherein the encryption is performed by the second encrypting portion when the portable device is powered by the second power supply portion.

16. A portable device equipped with an encrypting portion for encrypting information peculiar to the portable device and configured to authenticate between the portable device and a base station by transmitting the information encrypted by the encrypting portion to the base station, the portable device, comprising:
a power supply portion including a first power supply portion by a battery and a second power supply portion by electromagnetic induction,
wherein the portable device is configured to receive a signal for specifying the power supply portion of the portable device from the base station and switch the power supply portions based on the signal for specifying the power supply portion of the portable device.
